# EUROPEAN PATENT SPECIFICATION

(11) **EP 2 237 088 B1**
(45) Date of publication and mention of the grant of the patent: **17.04.2013**
(21) Application number: 09012978.4
(22) Date of filing: 14.10.2009
(51) Int. Cl.: G02B 6/00, G09G 3/34

(54) **Back light unit and liquid crystal display using the same**
Rücklichtspendende Einheit und Kristallanzeige damit
Unité de rétroéclairage et affichage de cristal liquide l'utilisant

(30) Priority: 01.04.2009 KR 20090028158
(43) Date of publication of application: 06.10.2010
(73) Proprietor: LG Display Co., Ltd., Seoul 150-721 (KR)
(72) Inventor: Han, Jaejung, Gangseo-gu Seoul (KR); Bang, Juyoung, Gangdong-gu Seoul (KR); Jun, Dukjin, Paju-si Gyeonggi-do (KR)
(74) Representative: TER MEER - STEINMEISTER & PARTNER GbR

(56) References cited:
- WO-A2-2008/022149
- US-A1- 2004 130 884
- WON-SIK OH ET AL: "A Novel Two-Dimensional Adaptive Dimming Technique of X-Y Channel Drivers for LED Backlight System in LCD TVs" JOURNAL OF DISPLAY TECHNOLOGY, IEEE SERVICE CENTER, NEW YORK, NY, US, vol. 5, no. 1, 1 January 2009 (2009-01-01) , pages 20-26, XP011252823 ISSN: 1551-319X

## Description

This nonprovisional application claims priority under 35 U.S.C. §119(a) on Patent Application No. 10-2009-0028158 filed in Republic of Korea on April 01,2009 the entire contents of which are hereby incorporated by reference.

### BACKGROUND

### Field

This document relates to a backlight unit capable of performing local dimming and a liquid crystal display using the same.

### Related Art

A liquid crystal display (LCD) has the characteristics of being light and thin and driven with low power consumption, so its application coverage is extending. The LCD is employed for a mobile computer such as a notebook computer, office automation equipment, audio/video devices, indoor/outdoor advertisement display device, and the like. A transmission type LCD, which is the most common LCD, displays an image by modulating light made incident from a backlight unit by controlling an electric field applied to a liquid crystal layer.

Picture quality of the LCD relies on the contrast characteristics. However, simply modulation of a light transmittance of the liquid crystal layer by controlling a data voltage applied to the liquid crystal layer of a liquid crystal panel has a limitation in improving the contrast characteristics. Thus, in order to improve the contrast characteristics, a backlight dimming control for adjusting the luminance of the backlight unit according to images has been developed, by which the contrast characteristics has been remarkably enhanced. The backlight dimming control method allows a reduction in power consumption by adaptively adjusting the luminance of the backlight unit according to input images. The backlight dimming method includes a global dimming method for adjusting the overall luminance of a display surface and a local dimming method for locally adjusting the luminance of a display surface. The global dimming method can improve dynamic contrast measured between a previous frame and a subsequent frame. In the local dimming method, the luminance of a display surface is locally controlled within one frame period to thus improve static contrast which can be hardly obtained by the global dimming method.

The backlight unit is divided into a direct type backlight unit and an edge type backlight unit. The edge type backlight unit has a structure that light sources are disposed to face the side of a light guide plate and a plurality of optical sheets are disposed between a liquid crystal panel and the light guide plate. The edge type backlight unit may be implemented to be thinner than the direct type backlight unit due to their structural differences, but the light sources irradiate light to one side of the light guide plate and the light guide plate changes linear light sources or dot light sources ((i.e., point light sources) into a surface light source. Thus, the edge type backlight unit having the existing cannot implement local dimming.

The direct type backlight unit has a structure in which a plurality of optical sheets disposed over a diffusion plate under a liquid crystal panel, and a plurality of light sources disposed under the diffusion plate. In the direct type backlight unit, the plurality of light sources may be disposed under the diffusion plate and individually controlled to implement local dimming. However, the thickness of the direct type backlight unit cannot be reduced, making it difficult to design a thinner LCD.

The reason for having a difficulty in reducing the thickness of the direct type backlight unit is because of the distance that must be secured between the diffusion plate and the light sources. The diffusion plate of the direct type backlight unit is used to diffuse light made incident from the light sources to obtain uniform luminance of the display surface. In order to sufficiently diffuse light of the direct type backlight unit, the distance between the light sources and the diffusion plate must be sufficiently long. However, with the trend that the LCD is increasingly thinner, the distance between the diffusion plate and the light sources is reduced but light from the light sources is not sufficiently diffused, possibly degrading the luminance uniformity of a displayed image due to a Becke's line phenomenon that light sources are seen on the displayed image. In an effort to solve such luminance nonuniformity problem of the displayed image, a method for increasing the number and disposition density of light sources, a method for strengthening a diffusion function of optical sheets by forming fine prism patterns or lens patterns on the diffusion plate facing the liquid crystal panel, a method for reinforcing the diffusion sheet, and the like, have been proposed, but these methods have a limitation in increasing the diffusion degree of light and inevitably increase the costs.

US 2004/0130884 A1 describes a backlight unit for a display device and a liquid crystal display device using the backlight unit are proved, wherein the light leakage to a neighboring region is suppressed when a display area is divided and driven by a Divided Display Area Method, thereby enhancing the display performance.; The backlight unit in one aspect includes a main light guide plate defined by an n number of regions for a field sequential driving, auxiliary light guide plates arranged below edges of the main light guide plate, first and second reflection plates arranged below the main light guide plate and the auxiliary light guide plate, a plurality of light source parts arranged at a predetermined interval at both sides of the auxiliary light guide plate, and a housing configured to enclose a side of the main light guide plate, the auxiliary light guide plate and side and lower portion of the light source parts.

WON-SIK OH ET AL: "A Novel Two-Dimensional Adaptive Dimming Technique of X-Y Channel Drivers for LED Backlight System in LCD TVs" JOURNAL OF DISPLAY TECHNOLOGY, IEEE SERVICE CENTER, NEW YORK, NY, US, vol. 5, no. 1, 1 January 2009 (2009-01-01), pages 20-26, XP011252823 ISSN: 1551-319X describes a novel 2D adaptive dimming technique with X-Y channels for LED backlight system LCD TVs. The proposed LED backlight has matrix-structured LED modules with row and column switches to control the brightness of individual division block. Therein, a new adaptive dimming algorithm and image manipulation technique for the proposed LED backlight system is contained. The proposed dimming technique is verified by simulation and experimental results based on the RGB-LED backlight of a 32-in LCD TV.

WO 2008/022149 A2 describes a display device, which includes a display panel; and a backlight panel provided below the display panel and defining a plurality of regions. A first array of LEDs is provided along a first direction, each LED of the first array being coupled to a first line. A driver is coupled to the first line to drive the LEDs coupled to the first line. A second array of LEDs is provided along a second direction, each LEDs of the second array being coupled to a second line. A lighting condition of the regions defined by the backlight panel is controlled by turning on or off the LEDs.

### SUMMARY

An aspect of this document is to provide a backlight unit capable of implementing local dimming while reducing the thickness of a liquid crystal display and improving contrast characteristics of the liquid crystal display, and a liquid crystal display using the same.

In one aspect, a backlight unit comprises: a first light guide plate comprising first intaglio patterned lines formed along a first direction thereon to define light guide channels in the first direction, wherein the depth of the first intaglio patterned lines is smaller than the thickness of the first light guide plate; a second light guide plate disposed under the first light guide plate and comprising second intaglio patterned lines formed thereon along a second direction crossing the first intaglio patterned lines to define light guide channels in the second direction, wherein the depth of the second intaglio patterned lines is smaller than the thickness of the second light guide plate; first light sources disposed to face the side of the first light guide plate and irradiating light to the light guide channels of the first direction; and second light sources disposed to face the side of the second light guide plate and irradiating light to the light guide channels of the second direction, wherein the light guide channels in the first direction and those in the second direction are perpendicular to each other.

Each of the first and second intaglio patterned lines has a section in at least one of a quadrangular (i.e., square, rectangular, etc.), triangular, circular, and oval shapes.

The first light guide plate may comprise first fine patterns formed on the first light guide plate within the light guide channels. The first fine patterns have a depth lower than the depth of the first intaglio patterned lines.

The second light guide plate may comprise second fine patterns formed on the second light guide plate within the light guide channels. The second fine patterns have a depth lower than the depth of the second intaglio patterned lines.

In another aspect, a liquid crystal display comprises: a liquid crystal display panel; and a backlight unit.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention. In the drawings:

FIG. 1 is a schematic block diagram of a liquid crystal display (LCD) according to an exemplary embodiment of the present invention.

FIG. 2 is an equivalent circuit diagram showing a portion of a pixel array of a liquid crystal panel of FIG. 1.

FIG. 3 illustrates blocks of first and second light guide plates divided by intaglio patterned lines.

FIGs. 4A to 4D are enlarged perspective views showing portions of the first and second light guide plates.

FIGs. 5A to 5C are sectional views of the intaglio patterned lines.

FIG. 6 is a sectional view of intaglio patterned lines and fine patterns.

FIG. 7 is a top plan view of a liquid crystal module formed by assembling the liquid crystal panel and a backlight unit.

FIG. 8A is a sectional view of the liquid crystal module taken along line I-I' in FIG. 7.

FIG. 8B is a sectional view of the liquid crystal module taken along line II-II' in FIG. 7.

FIG. 9 is a sectional view of the related art liquid crystal module using light emitting diodes (LEDs) as light sources.

FIG. 10 is a sectional view of the related art liquid crystal module using cold cathode fluorescent lamps (CCFLs) as light sources.

FIG. 11 illustrates experimentation results obtained by comparing a going-straight property of light of a light guide plate according to exemplary embodiments of the present invention and that of the related art.

### DETAILED DESCRIPTION

The foregoing and other objects, features, aspects and advantages of the present invention will become more apparent from the following detailed description of the present invention when taken in conjunction with the accompanying drawings.

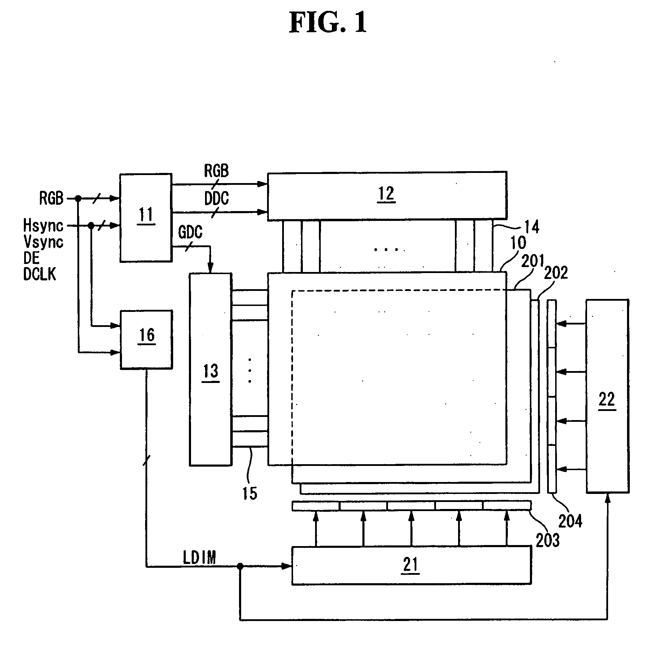

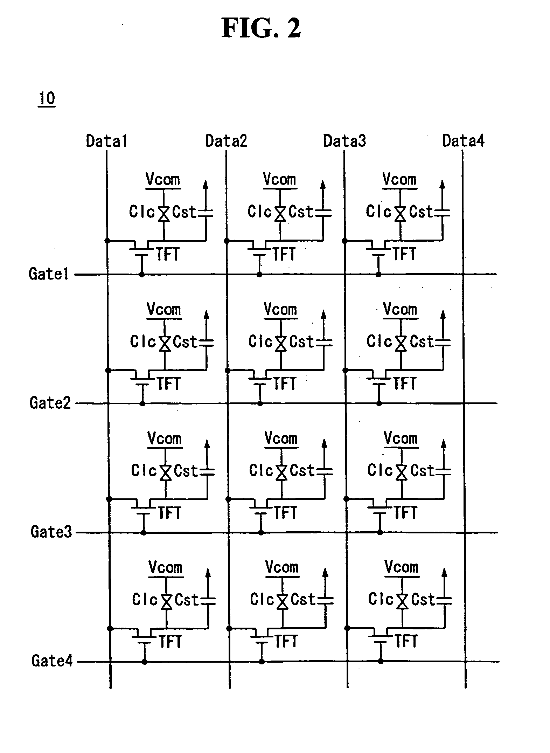

Exemplary embodiments of the present invention will now be described in detail with reference to FIGs. 1 to 11.

With reference to FIGs. 1 to 3, a liquid crystal display (LCD) according to an exemplary embodiment of the present invention includes a liquid crystal panel 10, a source driving unit 12 for driving data lines 14 of the liquid crystal panel 10, a gate driving unit for driving gate lines 15 of the liquid crystal panel 10, a timing controller 11 for controlling the source driving unit 12 and the gate driving unit 13, a backlight unit for irradiating light to the liquid crystal panel 10, light source driving units 21 and 22 for driving light sources 203 and 204 of the backlight unit, and an image analyzing unit 16 for analyzing an input image to control the light driving units 21 and 22 according to the analysis result.

The liquid crystal panel 10 includes two glass substrates and a liquid crystal layer interposed between the two glass substrates. The plurality of data lines 14 and the plurality of gate lines 15 cross on the lower glass substrate of the liquid crystal panel 10. Liquid crystal cells Clc are disposed in a matrix form on the liquid crystal panel 10. On the lower glass substrate of the liquid crystal panel 10, there are formed the data lines 14, the gate lines 15, thin film transistors (TFTs), pixel electrodes of the liquid crystal cells C 1 c connected to the TFTs, storage capacitors Cst, and the like.

Black matrixes, color filters and a common electrode are formed on the upper glass substrate of the liquid crystal panel 10. In a vertical field driving method such as a twisted nematic (TN) mode and a vertical alignment (VA) mode, the common electrode is formed on the upper glass substrate, and in an in-plane field driving method such as an in-plane switching (IPS) mode or a fringe field switching (FFS) mode, the common electrode is formed along with pixel electrodes on the lower glass substrate. Polarizers are attached to the upper and lower glass substrates of the liquid crystal panel 10, and an alignment film for setting a pre-tilt angle of liquid crystal is formed on an inner surface in contact with the liquid crystal.

The source driving unit 12 latches digital video data (RGB) under the control of timing controller 11. The source driving unit 12 converts the digital video data into positive polarity/negative polarity analog data voltages by using positive polarity/negative polarity gamma compensation voltages, and supplies the converted data voltages to the data lines 14.

The gate driving unit 13 includes a shift register, a level shifter for converting an output signal of the shift register such that the output signal has a swing width suitable for driving the TFTs of the liquid crystal cell, an output buffer, and the like. The gate driving unit 1, including a plurality of gate driver integrated circuits (ICs), sequentially outputs and supplies gate pulses (or scan pulses) with a pulse width of about 1 horizontal period to the gate lines 15.

The timing controller 11 receives digital video data (RGB) and timing signals Vsync, Hsync, DE, and DCLK inputted from a system board with an external video source mounted thereon, and supplies the received digital video data (RGB) to the source driving unit 12. Also, the timing controller 11 generates timing control signals DDC and GDC for controlling an operation timing of the source driving unit 12 and the gate driving unit 13 based on the timing signals Vsync, Hsync, DE, and DCLK from the system board. The timing controller 11 inserts an interpolation frame between frames of an input image signal inputted at a frame frequency of 60Hz and multiplies the source timing control signal DDC and the gate timing control signal GDC to control the operation of the source driving unit 12 and the gate driving unit 13 at a frame frequency of 60xN (N is a positive integer of 2 or larger) Hz.

The backlight unit includes first and second light guide plates 201 and 202, a plurality of first light sources 203 that irradiate light to the side of the first light guide plate 201, and a plurality of second light sources 204 that irradiate light to the side of the second light guide plate 202. Further, the backlight unit includes a plurality of optical sheets disposed between the light guide plate 201 and the liquid crystal panel 10.

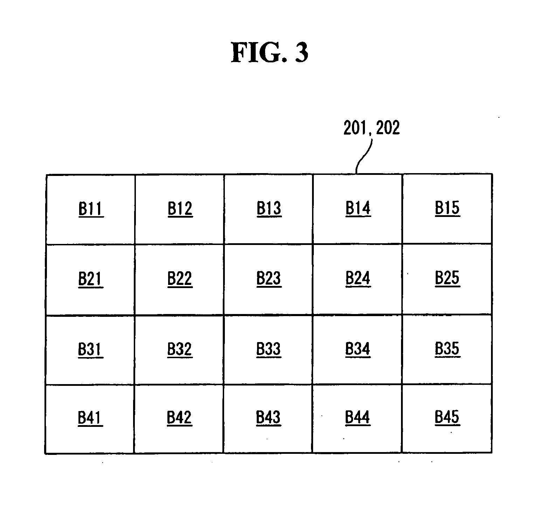

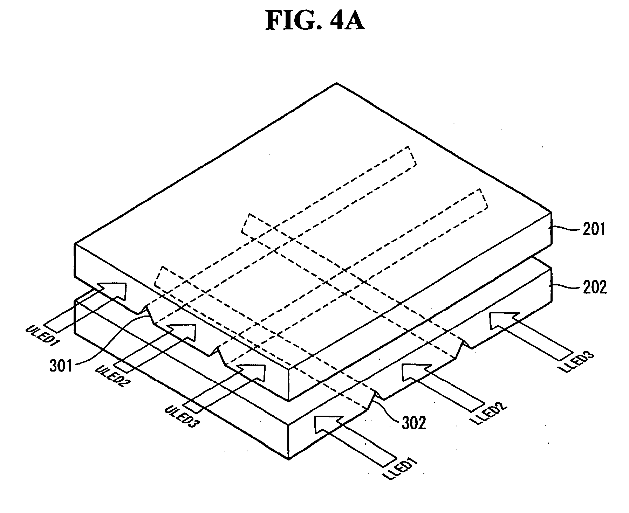

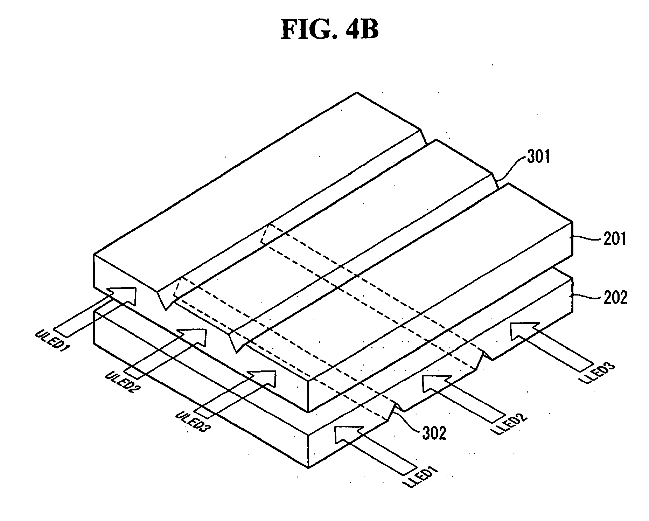

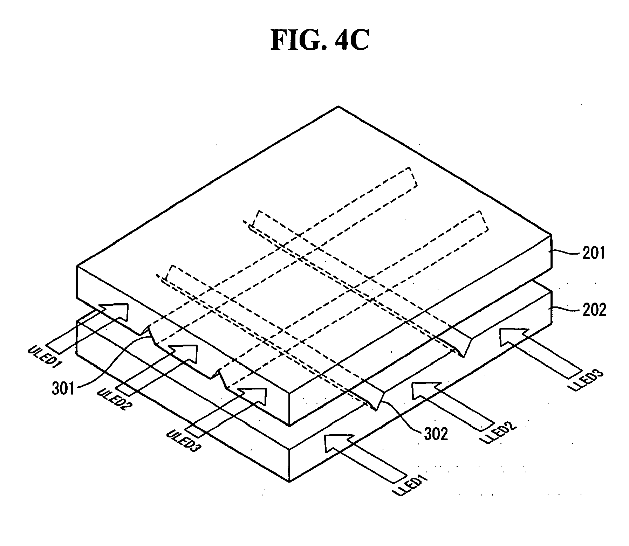

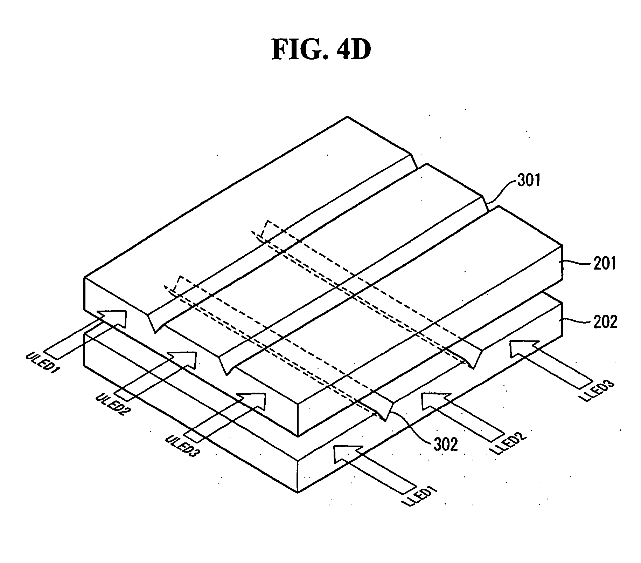

The first and second light guide plates 201 and 202 each may be fabricated with flat plates or wedge plates including a transparent resin. The first light guide plate 201 is disposed over the second light guide plate 202. The first light guide plate 201 may be fabricated with a transparent flat plate resin, and the second light guide plate 202 may be fabricated with a wedge plate with a slanting lower surface. The first and second light guide plates 201 and 202 each include intaglio patterned lines formed thereon as shown in FIG. 3. The intaglio patterned lines formed on the first light guide plate 201 are formed as recesses (or grooves) with a depth smaller than the thickness of the first light guide plate 201, dividing the first light guide plate 201 into a plurality of light guide channels in a column direction (or in a row direction). The intaglio patterned lines formed on the first light guide plate 201 are formed as recesses with a depth smaller than the thickness of the first light guide plate 201 to section the first light guide plate 201 into a plurality of light guide channels in the column direction (or in the row direction). In FIG. 3, the intaglio pattern lines formed on the first light guide plate 201 are formed on the boundary of the light guide channels of column direction (or horizontal light guide channels) to section the blocks B11 to B45 in a matrix form in the column direction (or in the row direction). The intaglio patterned lines formed on the second light guide plate 202 are formed as recesses with a depth smaller than the thickness of the second light guide plate 202 to section the second light guide plate 202 into a plurality of light guide channels in the row direction (or in the column direction). In FIG. 3, the intaglio patterned lines formed on the second light guide plate 202 are formed at the boundary between the light guide channels in the row direction (or in the column direction) to section the blocks B11 to B45 in the horizontal direction (or in the row direction). The blocks B11 to B45 divide luminance of a surface light source made incident to the liquid crystal panel 10 after being divided by the intaglio patterned lines into a size of smaller blocks to implement local dimming. The intaglio patterned lines formed on the first light guide plate 201 and those formed on the second intaglio plate 202 are perpendicular to each other. The intaglio patterns improve going-straight property of light propagated from the light guide plates 201 and 202 to divide light of the surface light source made incident to the liquid crystal panel 10 into the block units as shown in FIG. 3. The structural characteristics and optical function of the intaglio patterned lines will be described later with reference to FIGs. 4 to 11.

The first and second light sources 203 and 204 include dot light sources such as light emitting diodes (LEDs). The first light sources 203 are disposed at either an upper side or a lower side of the first light guide plate 201 in a facing manner, or at either a left side or a right side of the first light guide plate 201 in a facing manner. Current is separately supplied to each of the light sources 203 by the first light source driving unit 21 to independently control the amount of light emission. If the first light sources 203 are formed to face at least one of the upper side and the lower side of the first light guide plate 201, the second light guide sources 204 are disposed to face at least one of the left side and the right side of the second light guide plate 202. Differently, if the first light sources 203 face at least one of the left side and the right side of the first light guide plate 201, the second light sources 204 are disposed to face at least one of the upper side and the lower side of the second light guide plate 202. When the second light sources 204 face one side of the second light guide plate 202, the second light guide plate 202 may be fabricated as a transparent wedge plate which has a sloped lower surface and becomes thinner as it goes away from the light sources. Current is separately supplied to each of the second light sources 204 by the second light source driving unit 22 to independently control the amount of emitted light.

The first light source driving unit 21 differently adjusts the strength of the current separately supplied to the first light sources 203 under the control of image analyzing unit 16. The blocks B11 to B45 in FIG. 3 are defined by the crossing structure of the first directional light guide channels formed in the first light guide plate 201 and the second directional light guide channels formed in the second light guide plate 202. In response to a local dimming signal LDIM, the first light source driving unit 21 increases a supply current to the first light source 203 facing a light incident surface of the first directional light guide channels including brighter blocks of a display image displayed on the liquid crystal panel 10. Meanwhile, the first light source driving unit 21 relatively lowers the supply current to the first light source 203 facing the light incident surface of the first directional light guide channels including darker blocks of the display image displayed on the liquid crystal panel 10.

The second light source driving unit 22 differently adjusts the strength of the current separately supplied to the second light sources 204 under the control of image analyzing unit 16. In response to the local dimming signal LDIM, the second light source driving unit 22 increases a supply current to the second light source 204 facing a light incident surface of the second directional light guide channels including brighter blocks of a display image displayed on the liquid crystal panel 10. Meanwhile, in response to the local dimming signal LDIM, the second light source driving unit 22 relatively lowers the supply current to the second light source 204 facing the light incident surface of the second directional light guide channels including darker blocks of the display image displayed on the liquid crystal panel 10.

The image analyzing unit 16 analyzes digital video data RGB inputted from the system board to map an input image to the blocks B11 to B45 as shown in FIG. 3, and analyzes the luminance of the input image in units of the block size by using an image analysis scheme such as histogram analysis. The image analyzing unit 16 generates the local dimming signal LDIM for adjusting the supply current to the light sources 203 and 204 in proportional to the luminance analyzed by block size, to control the first and second light source driving units 21 and 22. The image analyzing unit 16 is synchronized with the timing controller 11 upon receiving the timing signals Vsync, Hsync, DE, and DCLK. The image analyzing unit 16 may be mounted on the external system board or within the timing controller 11.

FIGs. 4A to 4D are enlarged perspective views showing portions of the first and second light guide plates.

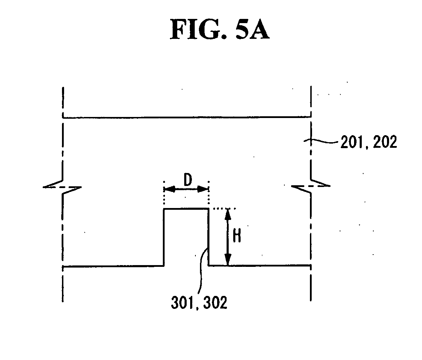

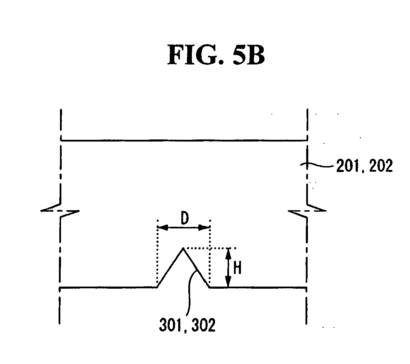

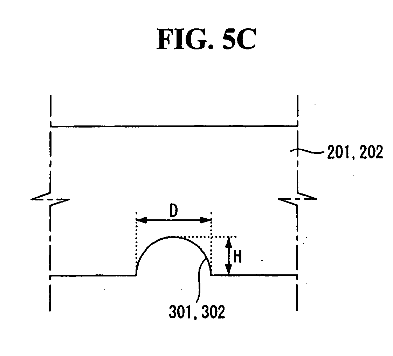

With reference to FIGs. 4A to 4D, the first intaglio patterned lines 301 formed on the first light guide plate 201 are perpendicular to the second intaglio patterned lines 302 formed on the second light guide plate 202. The first intaglio patterned lines 301 may be formed on one of upper and lower surfaces of the first light guide plate 201 as shown in FIGs. 4A to 4D, or the structures as shown in FIGs. 4A to 4D may be combined and formed both on the upper and lower surfaces of the first light guide plate 201, respectively. In FIGs. 4A to 4D, ULED1 to ULED3 indicate light made incident to the first light guide plate 201 from the light sources 203, and LLED1 to LLED 3 indicate light made incident to the second light guide plate 202 from the second light sources 204. The first light sources 203 emit light, which is to be made incident to the interior of a medium of the first light guide plate 201 through the side of the first light guide plate 201, according to current supplied from the first light source driving unit 21. The light emitted from the first light sources 203 is total-reflected by the first intaglio patterned lines 301 and propagates with a high straightness along the medium of the light guide channels defined by the adjacent first intaglio patterned lines 301. The second light sources 204 emit light, which is to be made incident to the interior of a medium of the second light guide plate 202 through the side of the first light guide plate 202, according to current supplied from the second light source driving unit 22. The light emitted from the second light sources 204 is total-reflected by the second intaglio patterned lines 302 and propagates with a high straightness along the medium of the light guide channels defined by the adjacent second intaglio patterned lines 302. The intaglio patterned lines 301 and 302 may have the section in various shapes such as quadrangular, triangular, circular, and oval shapes, or their combinations as shown in FIGs. 5A to 5C. The depth (H), width (D), and interval of the intaglio patterned lines 301 and 302 may be adjusted depending on the block size of FIG. 3 or the size and resolution of the liquid crystal panel.

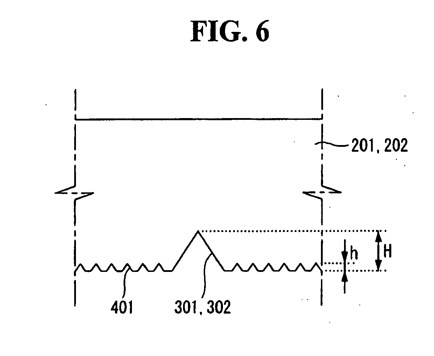

Besides the intaglio patterned lines 301 and 302 for sectioning the light guide channels formed in the first and second light guide plates 201 and 202, fine intaglio patterns may be also formed on the first and second light guide plates 201 and 202 as shown in FIG. 6. The fine patterns 401 may be formed on either upper or lower surface of the first and second light guide plates 201 and 202 or on both upper and lower surfaces of the first and second light guide plates 201 and 202. The fine patterns 401 serve to reflect light in its proceeding path toward the optical sheets and the liquid crystal display panel 10 within the light guide channels.

The fine patterns 401 may be formed to become denser as it goes away from the light sources 203 and 204 to compensate degradation of luminance at a position far away from the light sources 203 and 204 to increase a surface luminance uniformity of each light guide channel. For example, in case where the light sources 203 and 204 are formed to face only one side of the light guide plates 201 and 202, the fine patterns 401 may be formed on the upper or lower surface of each of the light guide plates 201 and 202 such that its density increases as it goes toward the other side of the light guide plates 201 and 202. In case where the light sources 203 and 204 are formed to face both sides of the light guide plates 201 and 202, the fine patterns 401 may be formed on the upper or lower surface of each of the light guide plates 201 and 202 such that its density increases as it goes toward central portions of the light guide plates 201 and 202. The depth (H) of the intaglio patterned lines 301 and 302 is higher than the depth (or height, h) of the fine patterns 401. For example, the ratio of H to h is about h:H = 1:2∼1:1000.

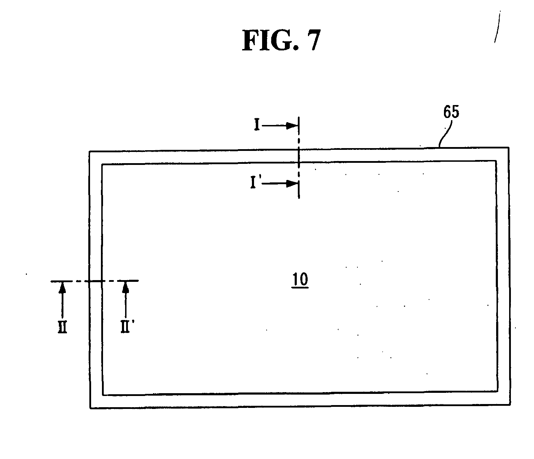

FIGs. 7 to 8B are plan view and sectional views illustrating in detail the structure of the liquid crystal module formed by assembling the liquid crystal panel 10 and the backlight unit disposed under the liquid crystal panel 10.

With reference to FIGs. 7 to 8B, the liquid crystal module according to an exemplary embodiment of the present invention includes a guide and case members integrally supporting various components of the liquid crystal panel 100 and the backlight unit. The guide and case members include a guide panel 61, a cover bottom 62, a case top 65, and the like. The guide panel 61 is fabricated as a rectangular frame made by mixedly containing glass fiber in a synthetic resin such as polycarbonate or the like and surrounds the edges of the liquid crystal panel 10 and the backlight unit. Step recesses are formed on the inner side wall of the guide panel 61, and light source housings 64, the light sources 203 and 204, metal printed circuit boards (MPCBs) 67, and the like, are installed at the step recesses. The step recesses formed on the inner side wall of the guide panel 61 face the side of the structure including the liquid crystal panel 10 and the backlight unit. The MPCBs 67 include a first MPCB with the first light sources 203 mounted thereon and a second MPCB with the second light sources 204 mounted thereon. The first and second light sources 203 and 204 may be implemented as light emitting diode (LED) packages, respectively. A circuit for electrically connecting the first light sources 203 and the first light source driving unit 21 are formed on the first MPCB, and a circuit for electrically connecting the second light sources 204 and the second light source driving unit 22 is formed on the second MPCB. The light source housing 64 is fabricated with a metal with high reflexibility, disposed within the step recesses of the guide panel 61, and bent to surround the light sources 203 and 204 to reflect light from the light sources 203 and 204 toward the light guide plates 201 and 202.

The cover bottom 62 is made of a metal of a rectangular frame and covers the lower surface of the guide panel 61 and the backlight unit. A reflection sheet 63 is formed between the cover bottom 62 and the second light guide plate 202.

The case top 65 is made of a metal of a rectangular frame and covers edges (or bezel region) of the upper surface of the liquid crystal panel 10, the upper surface of the guide panel 61, and the side of the cover bottom 62. A side wall of the case top 65 and a side wall of the cover bottom 62 overlap with each other, and the components 62 and 65 may be mutually fastened by screw(s) penetrating the case top 65 and the cover bottom 62 at the overlapping portion.

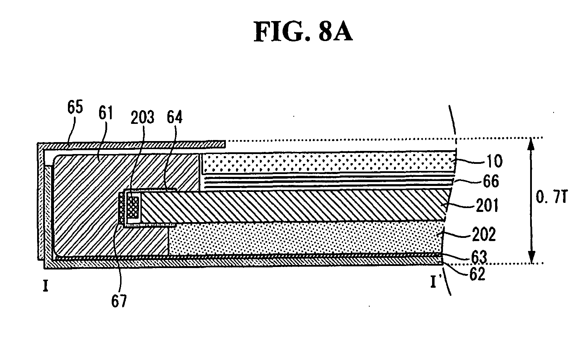

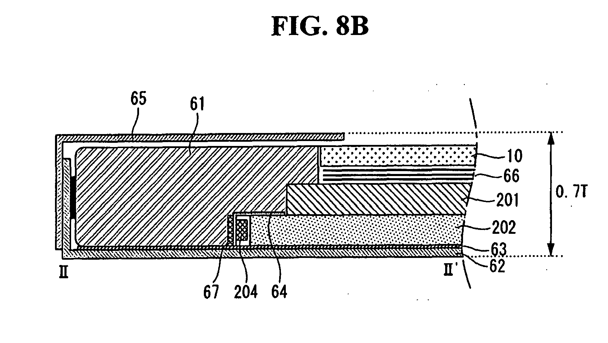

With reference to FIGs. 8A and 8B, reference numeral 66 denotes a plurality of optical sheets. The optical sheets 66, including one or more prism sheets and one or more diffusion sheets, diffuse light made incident from the diffusion plate and refract a proceeding path of light at an angle substantially perpendicular to the light incident surface of the liquid crystal panel. The optical sheets 66 may include a dual brightness enhancement film (DBEF).

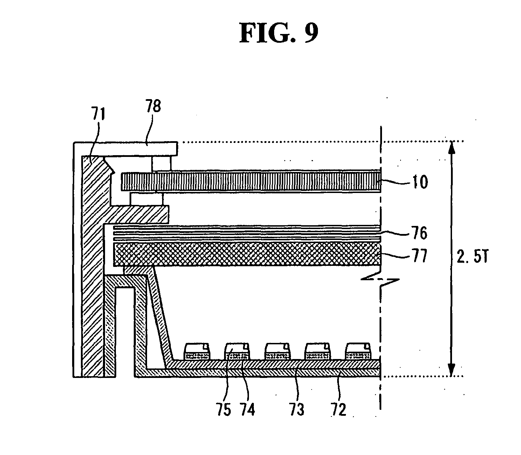

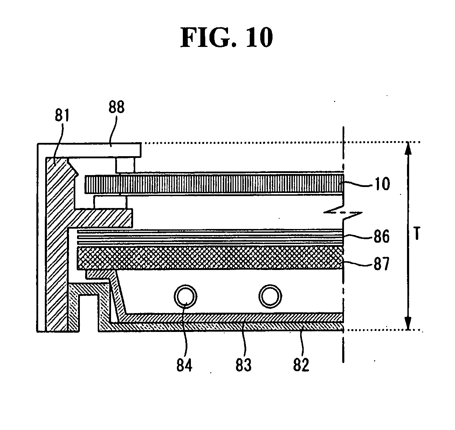

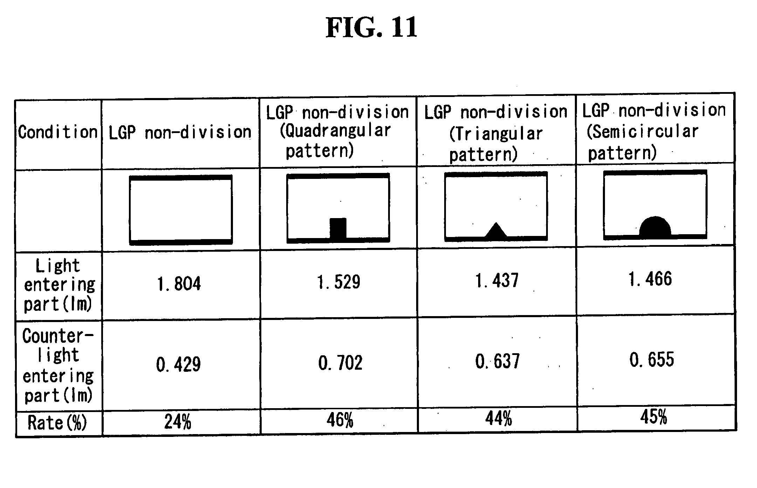

FIG. 9 is a sectional view of the related art liquid crystal module using LEDs as light sources. FIG. 10 is a sectional view of the related art liquid crystal module using cold cathode fluorescent lamps (CCFLs) as light sources. The liquid crystal module as shown in FIG. 9 includes a diffusion plate 77 and optical sheets 76 between the liquid crystal panel 10 and LED packages 75. Further, the liquid crystal module as shown in FIG. 9 includes a guide and case members such as a guide panel 71, a bottom cover 72, a case top 78, and the like, for fixing the backlight unit. MPCBs 74, on which the LED packages 75 are mounted, and a reflection sheet 73 are disposed on the bottom cover 72. The liquid crystal module as shown in FIG. 10 includes a diffusion plate 87 and optical sheets 86 between the liquid crystal panel 10 and CCFLs 84. Further, the liquid crystal module of FIG. 10 includes a guide and case members such as a guide panel 81, a bottom cover 82, a case top 88, and the like, for fixing the liquid crystal panel 10 and the backlight unit. The CCFLs 84 and a reflection sheet 83 are disposed on the bottom cover 82. The liquid crystal modules as shown in FIGs. 9 and 10 may be driven for local dimming by employing the direct type backlight, but as stated above, the liquid crystal modules have a limitation in reducing their thickness because of the minimum distance to be secured between the diffusion plates 77 and 87 and the light sources 75 and 84. If the thickness of the liquid crystal module of FIG. 10 is assumed as T, the thickness of the liquid crystal module of FIG. 9 has a thickness of about 2.5T, while the liquid crystal module according to the exemplary embodiment of the present invention as shown in FIGs. 8A and 8B is 0.7T, thinner. FIG. 11 illustrates experimentation results obtained by comparing the light straightness of the light guide plate according to exemplary embodiments of the present invention and that of the related art.

The inventors of the present invention conducted experimentation to confirm the local dimming effect of the present invention. In this experimentation, the same LED packages were used as light sources, and when light was irradiated to the light guide plates of the present invention and to those of the related art by applying the same current was applied to the LED packages, a luminous flux (lm) was measured by a 2D measuring instrument on the light guide plates. The light guide plate samples used for the experimentation were formed by laminating one of the light guide plates 202 and 201 on the reflection sheet 63 and laminating the diffusion sheet 66 thereon as shown in FIGs. 8A and 8B. The thickness of the light guide plates used as a sample #0 of the related art and samples #2, #12, and #18 was selected to be 3 t (=3mm). The intaglio patterned lines 301 and 302 having a quadrangular section were formed on the light guide plates 201 and 202 of the sample #2, and the width (D) of the intaglio patterned lines 301 and 302 was 1.0mm and the depth (H) was 1.0mm, respectively. The intaglio patterned lines 301 and 302 having a triangular section were formed on the light guide plates 201 and 202 of the sample #12, and the width (D) of the intaglio patterned lines 301 and 302 was 1.4mm and the depth (H) was 0.7mm, respectively. The intaglio patterned lines 301 and 302 having a semicircular section were formed on the light guide plates 201 and 202 of the sample #18, and the width (D) of the intaglio patterned lines 301 and 302 was 1.0mm and the depth (H) was 0.5mm, respectively. An optical tool used for this experimentation was SPEOS. The light guide plate samples used for the experimentation was modeled for a 15-inch notebook computer, and a luminous flux of a portion (about one-fourth) of the light guide plates was measured to save time for simulation. The results of the experimentation show that the luminous flux of a light entering part of the related art light guide plate was measured as 1.804 (lm) and that of a counter-light entering part was measured as 0.429 (lm). Thus, the rate of the luminous flux of the counter-light entering part to that of the light entering part of the related art light guide plate was as low as about 24%. This is because, in the related art light guide plate, light spreads widely in the vicinity of the light entering part and not much of the light propagates to the counter-light entering part because of its low straightness. The light entering part refers to one side of the light guide plate facing the light sources, and the counter-light entering part refers to the other side of the light guide plate, namely, the opposite side of the light sources.

In the experimentation results of FIG. 11, a rate of the luminous flux of the counter-light entering part to that of the light entering part of the light guide plates according to the exemplary embodiment of the present invention was measured as about 44% to 46%, although there is a slight difference depending on the shapes of the sections of the intaglio patterned lines. Thus, it was confirmed that the light guide plates according to the exemplary embodiment of the present invention allow light to propagate with high straightness to the counter-light entering part within the light guide channels owing to the intaglio patterned lines 301 and 302.

FIG. 11 represents the luminance measured on the light guide plates.

In the present invention, because a luminance difference between the blocks B11 to B45 can be reduced according to the experimentation results of FIG. 11 and by the orthogonal structure of light guide channels as shown in FIGs. 3 to 4C, and because the luminance of each of the blocks B11 to B45 can be controlled to be sufficiently bright independently, local dimming can be implemented by using the edge type backlight unit. The luminance of each of the blocks B11 to B45 is determined by the sum of the luminance of light made incident to the light guide channels in the first direction and that of light made incident to the light guide channels in the second direction.

As described above, the backlight unit and the LCD using the backlight unit can be thinner and implement local dimming by configuring two sheets of light guide plates in the edge type backlight unit and forming intaglio patterned lines perpendicular to each other on the light guide plates to define the blocks whose luminance is separately controlled.

## Claims

1. A liquid crystal display (LCD) device comprising:
a liquid crystal display panel (10); and
a backlight unit;
**characterized in that** the backlight unit comprises a first light guide plate (201) comprising first intaglio patterned lines (301) formed along a first direction thereon to define light guide channels in the first direction, a second light guide plate (202) disposed under the first light guide plate (201) and comprising second intaglio patterned lines (302) formed thereon along a second direction crossing the first intaglio patterned lines (301) to define light guide channels in the second direction, first light sources (21) disposed to face the side of the first light guide plate (201) and irradiating light to the light guide channels of the first direction, and second light sources (22) disposed to face the side of the second light guide plate (202) and irradiating light to the light guide channels of the second direction,
wherein the depth of the first intaglio patterned lines (301) is smaller than the thickness of the first light guide plate (201), and
wherein the depth of the second intaglio patterned lines (302) is smaller than the thickness of the second light guide plate (202),
wherein the light guide channels in the first direction and those in the second direction are perpendicular to each other.

2. The device of claim 1, wherein the first light guide plate (201) comprises first fine patterns(401) formed on the first light guide plate within the light guide channels, wherein the first fine patterns have a depth (h) less than the depth (H) of the first intaglio patterned lines.

3. The device of claim 2, wherein the second light guide plate (202) comprises second fine patterns (401) formed on the second light guide plate within the light guide channels, wherein the second fine patterns have a depth (h) less than the depth (H) of the second intaglio patterned lines.

4. The device of claim 1, wherein each of the first and second intaglio patterned lines (301, 302) has a section in at least one of a quadrangular, triangular, circular, and oval shapes.

## Patentansprüche

1. Flüssigkristallanzeigevorrichtung (LCD-Vorrichtung), die umfasst:
eine Flüssigkristallanzeigetafel (10); und
eine Hintergrundbeleuchtungseinheit;
**dadurch gekennzeichnet, dass** die Hintergrundbeleuchtungseinheit eine erste Lichtführungsplatte (201), die erste Intagliomuster-Linien (301) aufweist, die in einer ersten Richtung darauf ausgebildet sind, um Lichtführungskanäle in der ersten Richtung zu definieren, eine zweite Lichtführungsplatte (202), die unter der ersten Lichtführungsplatte (201) angeordnet ist und zweite Intagliomuster-Linien (302) aufweist, die darauf in einer zweiten Richtung quer zu den ersten Intagliomuster-Linien (301) ausgebildet sind, um Lichtführungskanäle in der zweiten Richtung zu definieren, erste Lichtquellen (21), die angeordnet sind, damit sie der Seite der ersten Lichtführungsplatte (201) zugewandt sind und Licht in die Lichtführungskanäle der ersten Richtung strahlen, und zweite Lichtquellen (22), die angeordnet sind, damit sie der Seite der zweiten Lichtführungsplatte (202) zugewandt sind und Licht in die Lichtführungskanäle der zweiten Richtung strahlen, umfasst,
wobei die Tiefe der ersten Intagliomuster-Linien (301) geringer ist als die Dicke der ersten Lichtführungsplatte (201), und
wobei die Tiefe der zweiten Intagliomuster-Linien (302) geringer ist als die Dicke der zweiten Lichtführungsplatte (202),
wobei die Lichtführungskanäle in der ersten Richtung und jene in der zweiten Richtung zueinander senkrecht sind.

2. Vorrichtung nach Anspruch 1, wobei die erste Lichtführungsplatte (201) erste feine Muster (401), die auf der ersten Lichtführungsplatte in den Lichtführungskanälen gebildet sind, umfasst, wobei die ersten feinen Muster eine Tiefe (h) besitzen, die geringer ist als die Tiefe (H) der ersten Intagliomuster-Linien.

3. Vorrichtung nach Anspruch 2, wobei die zweite Lichtführungsplatte (202) zweite feine Muster (401), die auf der zweiten Lichtführungsplatte in den Lichtführungskanälen gebildet sind, umfasst, wobei die zweiten feinen Muster eine Tiefe (h) besitzen, die geringer ist als die Tiefe (H) der zweiten Intagliomuster-Linien.

4. Vorrichtung nach Anspruch 1, wobei sowohl die ersten als auch die zweiten Intagliomuster-Linien (301, 302) einen Querschnitt mit viereckiger und/oder dreieckiger und/oder kreisförmiger und/oder ovaler Form haben.

## Revendications

1. Dispositif d'affichage à cristaux liquides (LCD) comprenant :
un panneau d'affichage à cristaux liquides (10) ; et
une unité de rétroéclairage ;
**caractérisé en ce que** l'unité de rétroéclairage comprend une première plaque de guidage de lumière (201) comprenant des premières lignes à motif en taille douce (301) formées le long d'une première direction sur celle-ci pour définir des canaux de guidage de lumière dans la première direction, une deuxième plaque de guidage de lumière (202) disposée sous la première plaque de guidage de lumière (201) et comprenant des deuxièmes lignes à motif en taille douce (302) formées sur celle-ci le long d'une deuxième direction en intersection avec les premières lignes à motif en taille douce (301) pour définir des canaux de guidage de lumière dans la deuxième direction, des premières sources de lumière (21) disposées pour faire face au côté de la première plaque de guidage de lumière (201) et irradiant de la lumière sur les canaux de guidage de lumière de la première direction, et des deuxièmes sources de lumière (22) disposées pour faire face au côté de la deuxième plaque de guidage de lumière (202) et irradiant de la lumière sur les canaux de guidage de lumière de la deuxième direction,
dans lequel la profondeur des premières lignes à motif en taille douce (301) est inférieure à l'épaisseur de la première plaque de guidage de lumière (201), et
dans lequel la profondeur des deuxièmes lignes à motif en taille douce (302) est inférieure à l'épaisseur de la deuxième plaque de guidage de lumière (202),
dans lequel les canaux de guidage de lumière dans la première direction sont perpendiculaires aux canaux de guidage de lumière dans la deuxième direction.

2. Dispositif selon la revendication 1, dans lequel la première plaque de guidage de lumière (201) comprend des premiers motifs fins (401) formés sur la première plaque de guidage de lumière à l'intérieur des canaux de guidage de lumière, dans lequel les premiers motifs fins ont une profondeur (h) inférieure à la profondeur (H) des premières lignes à motif en taille douce.

3. Dispositif selon la revendication 2, dans lequel la deuxième plaque de guidage de lumière (202) comprend des deuxièmes motifs fins (401) formés sur la deuxième plaque de guidage de lumière à l'intérieur des canaux de guidage de lumière, dans lequel les deuxièmes motifs fins ont une profondeur (h) inférieure à la profondeur (H) des deuxièmes lignes à motif en taille douce.

4. Dispositif selon la revendication 1, dans lequel chacune des premières et deuxièmes lignes à motif en taille douce (301, 302) a une section d'au moins une forme parmi une forme quadrangulaire, une forme triangulaire, une forme circulaire et une forme ovale.
